# EUROPÄISCHE PATENTSCHRIFT

(11) **EP 3 237 734 B1**
(45) Veröffentlichungstag und Bekanntmachung des Hinweises auf die Patenterteilung: **31.10.2018**
(21) Anmeldenummer: 15820067.5
(22) Anmeldetag: 15.12.2015
(51) Int. Cl.: F02B 37/16, F16K 1/48

(54) **VENTIL**
VALVE
SOUPAPE

(30) Priorität: 22.12.2014 DE 102014226885
(43) Veröffentlichungstag der Anmeldung: 01.11.2017
(73) Patentinhaber: Continental Automotive GmbH, 30165 Hannover (DE)
(72) Erfinder: BONANNO, Rosario, 65812 Bad Soden (DE)
(86) Internationale Anmeldenummer: PCT/EP2015/079793
(87) Internationale Veröffentlichungsnummer: WO 2016/102242

(56) Entgegenhaltungen:
- WO-A1-2007/048828
- WO-A1-2014/095402
- WO-A1-2014/095509
- DE-B3-102012 224 130
- FR-A1- 2 460 436
- FR-A1- 2 765 267

## Beschreibung

Gegenstand der Erfindung ist ein Ventil mit einem Gehäuse, einem in dem Gehäuse angeordneten Solenoid, einem von dem Solenoid bewegbaren Stift und einem mit dem Stift verbundenen topfförmigen Kolben, wobei der Kolben eine eingespritzte Membran als Boden besitzt und der Stift mit der Membran verbunden ist und einer Feder, welche an der Membran anliegt.

Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Ventilsitz wird vom Gehäuse des Turboladers gebildet, an dem das Ventil angeflanscht wird. Das hat zur Folge, dass der Ventilsitz nicht vollkommen parallel zum Kolben steht, was für ein schnelles und vor allem dichtes Schließen erforderlich wäre. Um trotzdem ein sicheres Schließen zu gewährleisten, muss sich der Kolben an den Ventilsitz anpassen. Hierzu ist es bekannt, den Stift mit der Membran des Kolbens zu verbunden. Aus der nicht vorveröffentlichten DE 10 2013 214 594 A1 ist bekannt, im Zentrum der Membran eine Buchse anzuordnen, um den Stift zu verankern. Die Buchse ist mit der Membran verpresst oder verschweißt. Nachteilig dabei ist, dass es durch die Befestigung der Buchse mit der Membran zu einer Schwächung der Membran, insbesondere hinsichtlich der Langzeitstabilität der Verbindung, kommt. Zudem wird die Membran durch die die Schließkraft erzeugende Feder beansprucht, vor allem durch seitliche Relativbewegungen der Feder.

Aus der FR 2 765 267 A1 ist ein EGR-Ventil mit einem Ventilteller bekannt. Der Ventilteller wird am Stift befestigt. Diese Befestigung weist einen Reduzierkörper auf, der am Stift vernietet ist.

Der Erfindung liegt daher die Aufgabe zugrunde, ein Ventil mit verbesserter Langzeitstabilität zu schaffen.

Gelöst wird die Aufgabe dadurch, dass die Membran am Stift vernietet ist.

Mit dem Vernieten wird die Membran zwischen Nietkopf und Stift fixiert und so ein inniger und langzeitstabiler Verbund geschaffen, da keine Schwächung der Membran erfolgt.

In einer vorteilhaften Ausgestaltung wird die Langzeitstabilität der Membran noch erhöht, wenn diese Mittel zum Führen der Feder besitzt.

Im einfachsten Fall ist dieses Mittel eine umlaufende Sicke an der sich die Feder zentriert. Durch diese Zentrierung wird eine Bewegung der Feder relativ zur Membran, und damit Beschädigungen der Membran vermieden.

Eine solche Zentrierung der Feder lässt sich gemäß einer anderen vorteilhaften Ausgestaltung dadurch erreichen, dass die Mittel mindestens zwei voneinander beabstandete Sicken sind. Der Vorteil besteht darin, dass die Sickenlänge kleiner sein kann.

Eine gute Zentrierung wird erreicht, wenn die Sicken sternförmig angeordnet sind.

In einer anderen Ausgestaltung sind die Sicken auf einem Durchmesser liegend angeordnet.

Eine andere vorteilhafte Ausgestaltung besteht darin, die Membran gezielt an die Belastung und strömende Medien anpassbar zu gestalten, wenn die Membran aus Kunststoff oder Metall besteht.

An einem Ausführungsbeispiel wird die Erfindung näher beschrieben. Es zeigt in:
- Fig. 1: eine Schnittdarstellung des erfindungsgemäßen Ventils,
- Fig. 2: eine vergrößerte Darstellung der Nietverbindung und
- Fig. 3 - 5: weitere Ausführungsformen der Membran.

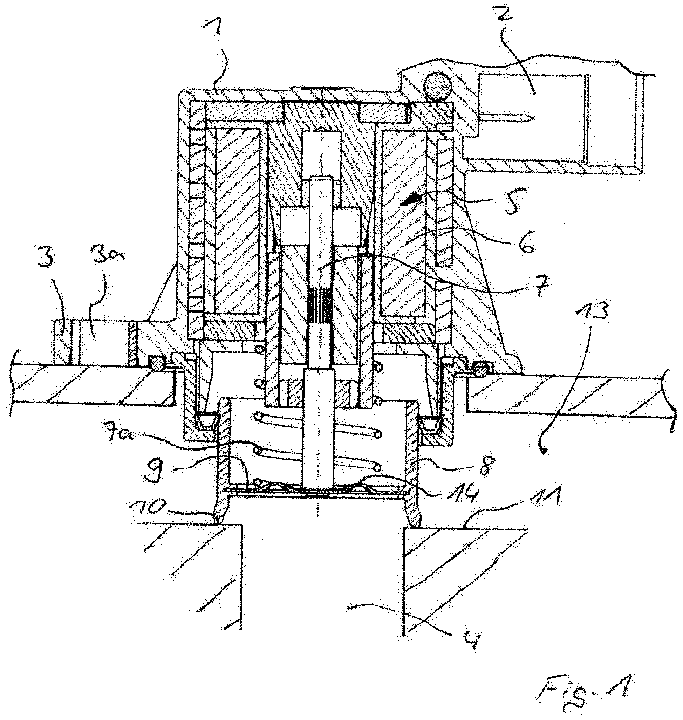

Figur 1 zeigt das Ventil, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In dem Gehäuse 1 ist ein Solenoid 5 mit einer Spule 6 und einem Metallstift 7 angeordnet. Der Metallstift 7 ist mit einem topfförmigen Kolben 8 aus Kunststoff verbunden, der am Umfang seines Bodens 9 eine axial abstehende ringförmige Dichtfläche 10 besitzt. In der gezeigten Schließstellung liegt die Dichtfläche 10 auf dem Ventilsitz 11 an, um die Bypassleitung 4 zu verschließen, so dass kein Medium von aus der Leitung 4 in die Leitung 13 strömen kann. Eine Feder 7a drückt dabei den Kolben 8 in Richtung Ventilsitz 11. Der Boden 9 ist eine Kunststoffmembran, welche durch Umspritzen in dem Kolben 8 angeordnet ist. Die Membran 9 besitzt eine umlaufende Sicke 14 an der sich die Feder 7a zentriert.

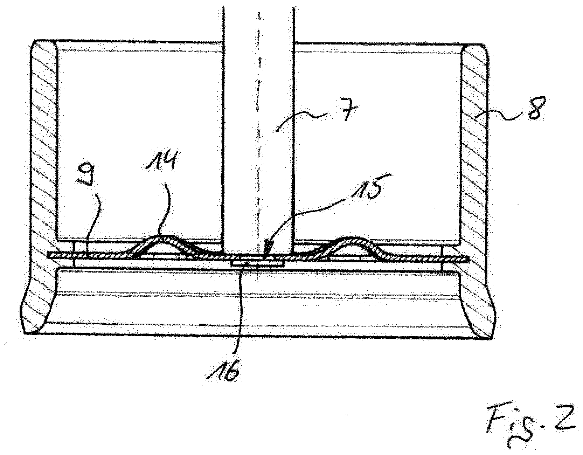

Figur 2 zeigt die Verbindung des Stifts 7 mit der Membran 9. Hierzu ist ein Niet 15 in den Stift 7 so eingebracht, dass die Membran 9 zwischen dem Stift 7 und dem Nietkopf 16 geklemmt ist.

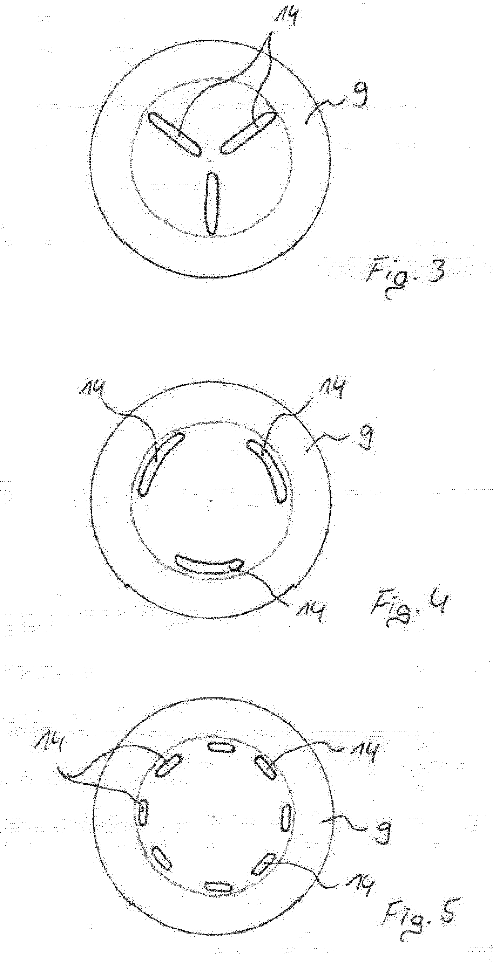

Die Figur 3 zeigt die Membran 9 mit drei sternförmig angeordneten Sicken 14, wobei sich die Feder radial außen an den Sicken 14 zentriert. Figur 4 zeigt drei symmetrisch auf einem Durchmesser angeordnete Sicken 14, welche bogenförmig ausgebildet sind, während in Figur 5 acht geradlinige Sicken 14 analog zu Figur 4 angeordnet sind.

## Patentansprüche

1. Ventil mit einem Gehäuse, einem in dem Gehäuse angeordneten Solenoid, einem von dem Solenoid bewegbaren Stift und einem mit dem Stift verbundenen topfförmigen Kolben, wobei der Kolben eine eingespritzte Membran als Boden besitzt und der Stift mit der Membran verbunden ist und einer Feder, welche an der Membran anliegt, **dadurch gekennzeichnet, dass** die Membran (9) am Stift (7) vernietet ist.

2. Ventil nach Anspruch 1, **dadurch gekennzeichnet, dass** die Membran (9) Mittel (14) zum Führen der Feder (7) besitzt.

3. Ventil nach Anspruch 2, **dadurch gekennzeichnet, dass** die Mittel eine umlaufende Sicke (14) sind.

4. Ventil nach Anspruch 2, **dadurch gekennzeichnet, dass** die Mittel mindestens zwei voneinander beabstandete Sicken (14) sind.

5. Ventil nach Anspruch 3, **dadurch gekennzeichnet, dass** die Sicken (14) sternförmig angeordnet sind.

6. Ventil nach Anspruch 3, **dadurch gekennzeichnet, dass** die Sicken (14) auf einem Durchmesser liegend angeordnet sind.

7. Ventil nach zumindest einem der vorhergehenden Ansprüche, **dadurch gekennzeichnet, dass** die Membran (9) aus Kunststoff oder Metall besteht.

## Claims

1. Valve having a housing, having a solenoid which is arranged in the housing, having a pin which can be moved by the solenoid and having a pot-shaped piston which is connected to the pin, wherein the piston has an injection-molded diaphragm as a base and the pin is connected to the diaphragm, and having a spring which bears against the diaphragm, **characterized in that** the diaphragm (9) is riveted to the pin (7).

2. Valve according to Claim 1, **characterized in that** the diaphragm (9) has means (14) for guiding the spring (7a).

3. Valve according to Claim 2, **characterized in that** the means are a circumferential bead (14).

4. Valve according to Claim 2, **characterized in that** the means are at least two beads (14) which are spaced apart from one another.

5. Valve according to Claim 3, **characterized in that** the beads (14) are arranged in a star shape.

6. Valve according to claim 3, **characterized in that** the beads (14) are arranged such that they lie on a diameter.

7. Valve according to at least one of the preceding claims, **characterized in that** the diaphragm (9) is composed of plastic or metal.

## Revendications

1. Soupape présentant
un boîtier,
un solénoïde disposé dans le boîtier,
une tige apte à être déplacée par le solénoïde,
un piston en forme de cuvette relié à la tige,
le piston possédant comme fond une membrane formée par injection et la tige étant reliée à la membrane, et
un ressort qui s'appuie contre la membrane,
**caractérisée en ce que**
la membrane (9) est rivetée sur la tige (7).

2. Soupape selon la revendication 1, **caractérisée en ce que** la membrane (9) possède des moyens (14) de guidage du ressort (7a) .

3. Soupape selon la revendication 2, **caractérisée en ce que** les moyens sont formés d'une moulure périphérique (14).

4. Soupape selon la revendication 2, **caractérisée en ce que** les moyens sont formés d'au moins deux moulures (14) disposées à distance mutuelle.

5. Soupape selon la revendication 3, **caractérisée en ce que** les moulures (14) sont disposées en étoile.

6. Soupape selon la revendication 3, **caractérisée en ce que** les moulures (14) sont disposées sur un diamètre.

7. Soupape selon au moins l'une des revendications précédentes, **caractérisée en ce que** la membrane (9) est réalisée en matière synthétique ou en métal.
